# FASCICULE DE BREVET EUROPEEN

(11) **EP 0 882 881 B1**
(45) Date de publication et mention de la délivrance du brevet: **30.07.2003**
(21) Numéro de dépôt: 98401326.8
(22) Date de dépôt: 04.06.1998
(51) Int. Cl.: F02K 1/70

(54) **Inverseur de poussée de turboréacteur à portes munies d'un becquet mobile à entrainement optimisé**
Schubumkehrvorrichtung für ein Strahltriebwerk dessen Umkehrklappen mit optimal entfaltbaren Leitflächen versehen sind
Doors with optimally deployable spoilers for a jet engine thrust reverser

(30) Priorité: 05.06.1997 FR 9706942
(43) Date de publication de la demande: 09.12.1998
(73) Titulaire: HUREL-HISPANO LE HAVRE, 76700 Harfleur (FR)
(72) Inventeur: Gonidec, Patrick, 76290 Montivilliers (FR); Vauchel, Guy Bernard, 76610 Le Havre (FR)

(56) Documents cités:
- EP-A- 0 771 945
- US-A- 3 601 992
- US-A- 4 894 985
- US-A- 5 003 770

## Description

La présente invention concerne un dispositif d'inversion de poussée de turboréacteur à double flux. Le turboréacteur est équipé d'un conduit en arrière de la soufflante dont le but est de canaliser le flux secondaire dit froid, ce conduit est constitué d'une paroi interne qui entoure la structure du moteur proprement dite en arrière de la soufflante, et d'une paroi externe dont la partie amont vient en continuité du carter moteur qui entoure la soufflante. Cette paroi externe peut canaliser à la fois le flux secondaire et le flux primaire dans sa partie aval, et ceci en arrière de l'éjection du flux primaire, dit chaud, dans le cas de nacelle à flux mélangés ou à flux confluents par exemple, mais dans d'autres cas, la paroi externe ne canalise que le flux secondaire, dans le cas de nacelles dites à flux séparés.

Une paroi peut également caréner l'extérieur du moteur, c'est à dire l'extérieur du carter qui entoure la soufflante et l'extérieur de la paroi extérieure du conduit décrit ci-dessus, ceci dans le but de minimiser la traînée de l'ensemble propulsif. Ceci est notamment le cas pour des ensembles propulsifs rapportés sur l'extérieur d'aéronef, particulièrement lorsque ces ensembles propulsifs sont attachés sous les ailes ou à l'arrière du fuselage.

Nous appellerons capotage extérieur l'ensemble constitué par la paroi extérieure de la nacelle.

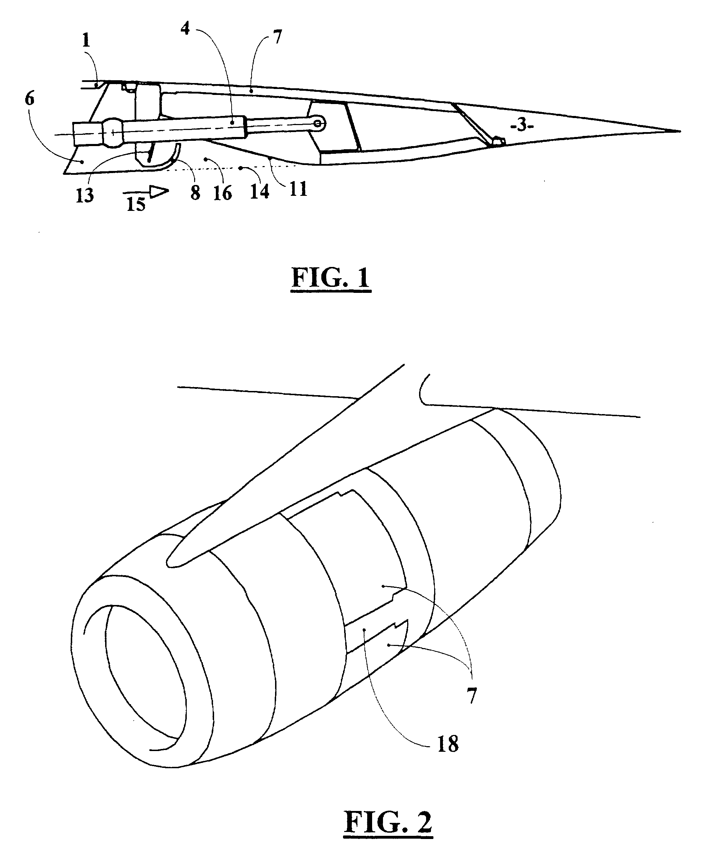

La figure 1 des dessins joints montre un exemple connu de réalisation d'un inverseur de poussée de ce type, appliqué comme le montre la vue schématique partielle en perspective de la figure 2, à un turboréacteur à double flux.

Le dispositif d'inversion est constitué de portes 7 formant une partie mobile et constituant en position inactive, lors d'un fonctionnement en jet direct, une partie du capotage extérieur, et d'une structure fixe réalisant ce capotage extérieur en amont des portes, par une partie amont 1 en aval des portes par une partie aval 3 et entre les portes 7 par l'intermédiaire de poutres 18 qui relient la partie aval 3 du capotage extérieur à la partie amont du capotage extérieur. Les portes 7 sont montées sur une circonférence du capotage extérieur et sont montées pivotantes dans une zone intermédiaire de leurs parois latérales sur les poutres 18 situées de part et d'autre de ces portes, ces parois latérales constituant avec les parois amont et aval, les parois qui relient la partie extérieure des portes 7, qui constituent une partie de la paroi extérieure de la nacelle, à la partie intérieure 11 des portes 7, qui constituent une partie de la paroi extérieure du conduit.

La partie amont 1 de structure fixe comporte un cadre avant 6 qui sert de support aux moyens de commande des déplacements des portes 7, constitués par exemple par des vérins 4.

En position activée, les portes 7 basculent de telle façon que la partie des portes situées en aval des pivots, vient obstruer plus ou moins totalement le conduit, et de telle façon que la partie amont des portes vient dégager un passage dans le capotage extérieur de manière à permettre au flux secondaire d'être canalisé radialement par rapport à l'axe du conduit. La partie amont des portes 7 fait saillie à l'extérieur du capotage extérieur pour des raisons de dimensionnement du passage qui doit être capable de laisser passer ce flux sans compromettre le fonctionnement du moteur. L'angle de pivotement des portes est ajusté de manière à permettre le passage du flux et de manière à supprimer la poussée de ce flux, voire à commencer à générer une contre poussée en générant une composante du flux dévié vers l'amont. Des exemples connus de réalisation sont illustrés par exemple par FR 1.482.538 ou par FR-A-2.030.034.

Enfin la commande des portes d'une position à une autre par vérin est connue en soi, nous noterons cependant la solution très simple où il y a un vérin par porte fixé dans sa partie amont à la structure fixe amont du capotage extérieur, et dans sa partie aval à la porte en un point situé dans la partie amont comme décrit par exemple par FR 1 482 538.

Généralement pour ce type d'inverseur, la porte 7 est complétée par un ensemble de déflecteurs destinés à canaliser l'écoulement inversé lorsque l'inverseur se trouve en position d'inversion de poussée et la porte 7 en position ouverte ou déployée. Cet ensemble comporte notamment en amont de la porte un déflecteur 13 constitué d'une partie frontale associée ou non à des parties latérales. Afin que la porte 7, en position ouverte d'inversion de poussée, assure des performances suffisantes, il est habituellement nécessaire, comme dans l'exemple connu, représenté à la figure 1, que la partie avant du panneau interne 11 s'écarte, dans une direction radiale extérieure, d'une surface extérieure, d'une surface théorique représentée par la ligne 14, correspondant à une enveloppe théorique de délimitation aérodynamique continue parfaite de la veine du flux secondaire des gaz, représenté par la flèche 15. Une cavité 16 se trouve ainsi formée du côté intérieur de la porte 7 lorsqu'elle se trouve en position fermée correspondant à la poussée directe, délimitée, à l'avant, par le déflecteur 13 de porte et par le bord de déviation 8 de la partie fixe amont 1, du côté externe, par la partie avant du panneau interne 11 de la porte et du côté radialement interne, par ladite surface théorique 14. Une partie du flux est alors forcée par le bord de déviation 8 dans ladite cavité 16, créant ainsi une distorsion du flux et des pertes aérodynamiques qui sont néfastes au fonctionnement en poussée directe.
FR-A-2.618.853 apporte une solution à ce problème en annulant ou en minimisant la cavité 16 sur la porte 7. La présence d'un becquet mobile escamotable manoeuvré par le vérin de porte jusqu'à une position de débordement du becquet par rapport au fond de porte en phase d'inversion du jet permet d'obtenir les performances requises.
Les systèmes proposés sont associés à la tige du vérin d'entraînement des portes 7 ou à un entraînement automatique du becquet. Le becquet ressort du fond de porte dès le début de la manoeuvre des portes, soit progressivement comme dans le cas d'entraînement du becquet par le vérin, soit complètement dès la première phase de la manoeuvre d'ouverture de la porte comme dans le cas d'entraînement automatique du becquet par un système de ressorts.
L'inconvénient majeur est le masquage d'une partie de la section de passage du flux d'inversion pendant l'ouverture de la porte pouvant créer certain problème sur les performances moteur durant cette phase intermédiaire de l'inversion.

Un inverseur de poussée à portes pivotantes du type précité permettant d'éviter ces inconvénients des réalisations connues antérieures est caractérisé en ce que les moyens de commande de déplacement du becquet mobile par rapport à la porte conservent une position inactive pendant une première phase d'ouverture de la porte, ledit becquet conservant une position escamotée tandis qu'en fin d'ouverture de la porte seulement, lesdits moyens de commande assurent le déploiement du becquet.

Avantageusement, les moyens de commande de déplacement du becquet mobile par rapport à la porte sont constitués par un vérin ou une bielle reliés à la structure fixe d'inverseur. Lesdits moyens de commande de déplacement du becquet mobile peuvent également être associés au vérin de commande des déplacements de la porte d'inverseur.

Les dispositions de l'invention permettent d'obtenir une optimisation des débits de flux du turboréacteur lors de l'ouverture des portes de l'inverseur en utilisant une porte sans cavité associée à un becquet mobile.

D'autres caractéristiques et avantages de l'invention seront mieux compris à la lecture de la description qui va suivre des modes de réalisation de l'invention, en référence aux dessins annexés sur lesquels :
- la figure 1 représente une demi-vue schématique, en coupe longitudinale par un plan passant par l'axe de rotation d'un turboréacteur associé, d'un inverseur de poussée à portes pivotantes, en position fermées d'un type connu et qui a fait précédemment l'objet d'une description ;
- la figure 2 représente une vue schématique en perspective d'une nacelle comportant un inverseur de poussée du type précité montré en position monté et avec les portes fermée ;
- la figure 3 représente un schéma de principe d'un mode de l'invention ;
- la figure 4 représente, dans une vue analogue à la figure 1, l'inverseur de poussée en position jet direct d'un mode de l'invention ;
- la figure 5 représente une vue schématique en perspective avant de l'inverseur de poussée représenté à la figure 4 ;
- la figure 6 représente le principe défini dans la figure 4 dans une phase intermédiaire d'ouverture de la porte ;
- la figure 7 représente le principe défini dans la figure 4 dans une phase d'inversion de jet ;
- la figure 8 représente une vue schématique en perspective avant de l'inverseur de poussée représenté à la figure 7.
- les figures 9 à 11 représentent un autre mode de l'invention dans les mêmes configurations que pour les figures 4 à 8 ;
- les figures 12 et 13 représentent un mode d'entraînement du becquet par le vérin de porte ;
- la figure 14 représente un mode de guidage du becquet.

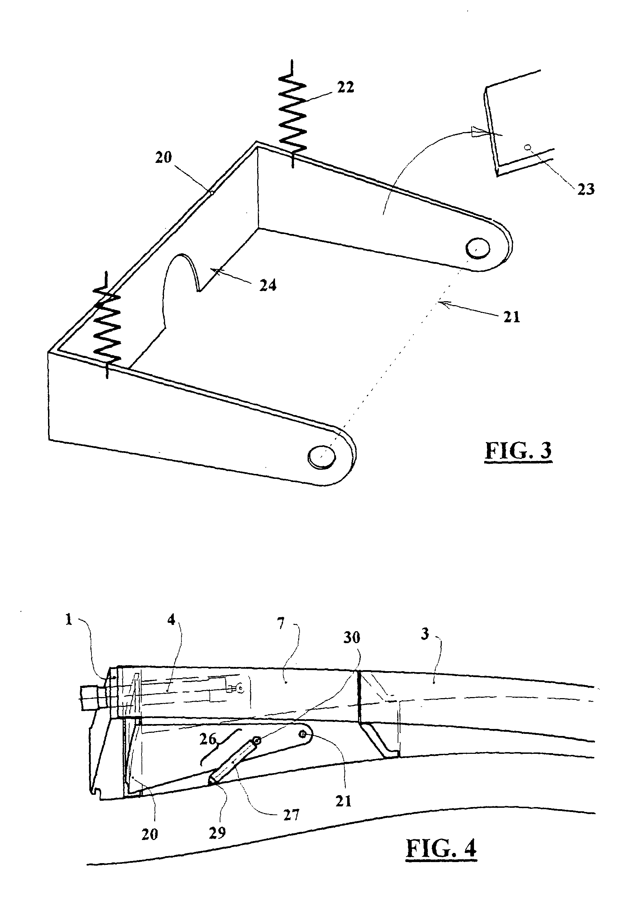

La figure 3 montre un principe schématique de l'invention. Le becquet 20 pivote autour de son axe 21. Un ou des systèmes de manoeuvre automatique connu de l'homme du métier, ici représenté par des ressorts de traction 22, dont l'extrémité opposée du ressort pour ce cas est solidaire de la porte 7, maintiennent le becquet en position fixe par rapport à la porte 7 pendant toute une partie de la manoeuvre d'ouverture de celle-ci jusqu'à ce que le becquet 20 vienne au contact d'une butée fixe 23, solidaire de la structure fixe 1 de l'inverseur qui arrête ledit becquet dans une position angulaire définie, tandis que la porte 7 continue sa rotation jusqu'à sa position finale d'inversion du jet. Le différentiel créé entre les deux rotations permet à la partie inférieure 24 du becquet 20 de dépasser de la face interne de la porte 7 dans la position jet inversé.

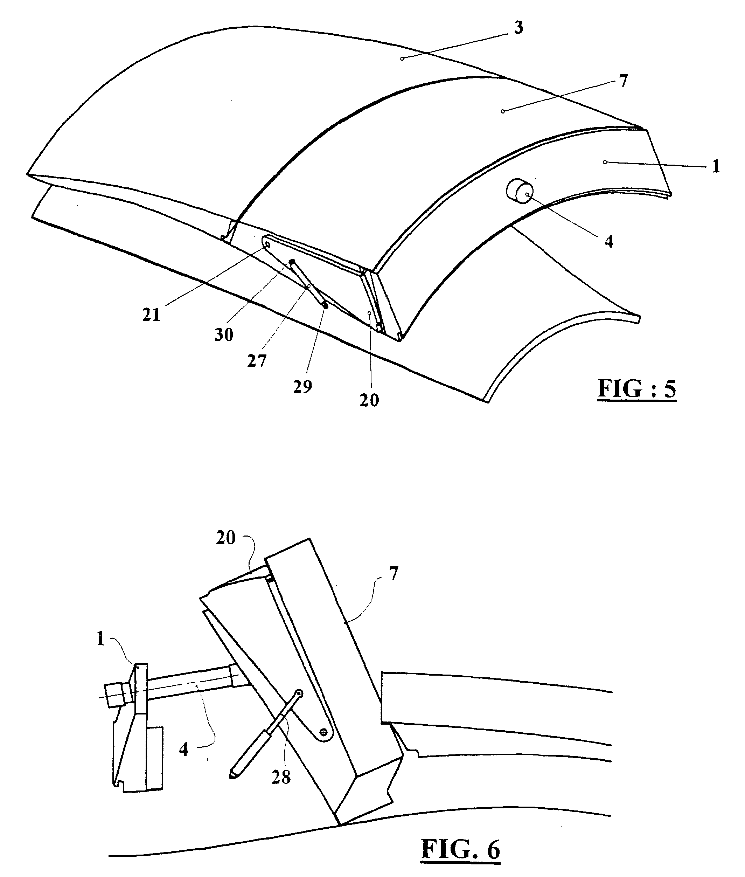

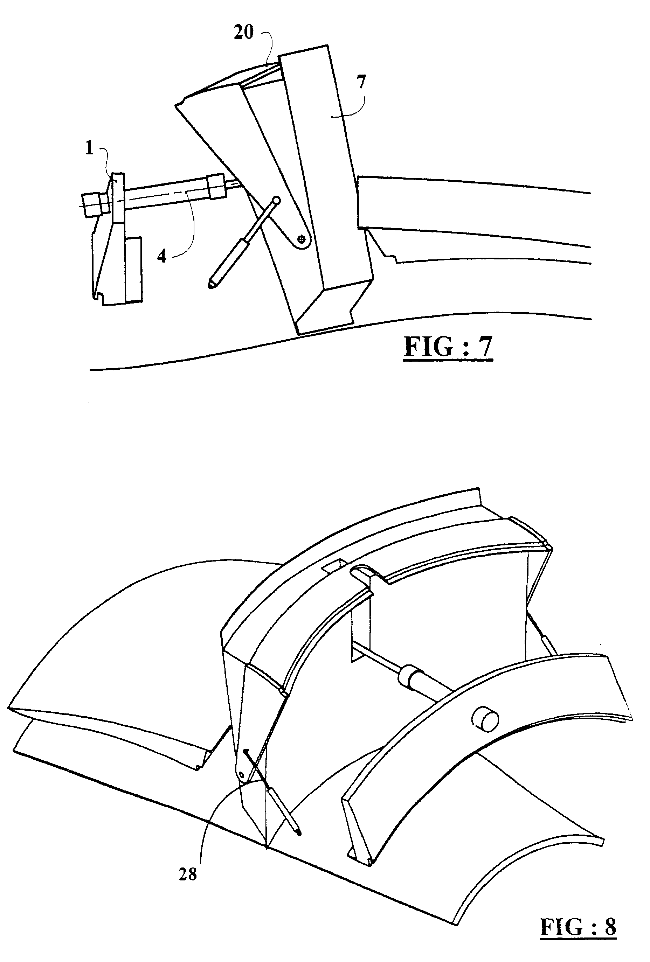

Une application plus concrète est représentée sur les figures 4 à 8. Un becquet mobile 20 comporte une partie frontale au bord amont de la porte 7 d'inverseur de poussée et deux parties latérales articulées en aval autour d'un pivot 21. Celui-ci peut être coaxial avec le pivot de la porte 7 ou décalé de celui-ci, l'emplacement dudit pivot 21 du becquet 20 étant situé au meilleur endroit défini pour atteindre les performances d'inversion du jet souhaitées. Un (ou des) vérin(s) 26 comporte(nt) un corps 27 dans lequel coulisse un piston relié à une tige d'entraînement 28. Le vérin 26 est disposé entre une articulation 29 solidaire de la structure fixe d'inverseur et une liaison articulée 30 sur le becquet 20.
Un ressort, pour ce cas, à l'intérieur du corps 27 réalise la manoeuvre du becquet 20. Ce ressort peut être aussi monté à l'extérieur du vérin 27 associé audit vérin ou à tout autre endroit entre le becquet 20 et la porte 7.

Le becquet mobile 20 reste escamoté par rapport à la surface interne de la porte 7 pendant toute la première phase de manoeuvre d'ouverture de la porte. L'arrêt en rotation du becquet 20 étant assuré par une limitation de la course du piston par exemple dans le corps 27 du vérin 26.

L'emplacement ou la position du système de manoeuvre 26 du becquet 20 est définie pour permettre la meilleure cinématique souhaitée soit en partie latérale ou frontale du becquet 20.

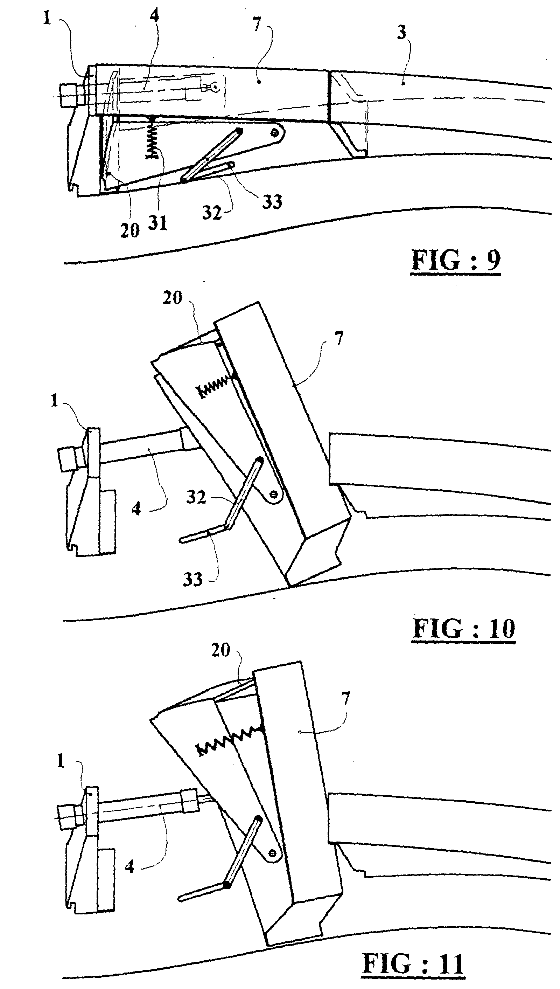

Les figures 9 à 11 représentent un autre mode de réalisation de l'invention. Un becquet 20, relié à la porte 7, par une liaison élastique à ressort 31, comme précédemment développé sur la figure 3, a sa manoeuvre de rotation arrêtée avant la fin de celle de la porte 7 par une bielle 32 coulissant dans une rainure 33 faisant partie de la structure fixe 1 de l'inverseur, ou tout autre système réalisant la même fonction. L'extrémité aval de la rainure 33 peut-être, par exemple, la butée du déplacement en translation de la bille 32. Il est à noter qu'une bielle 32 peut être utilisée par becquet ou par côté de becquet.

la rainure peut être réalisée suivant n'importe quelle forme, rectiligne, curviligne ou autre, horizontale, inclinée et même conjuguer plusieurs paramètres entre-eux.

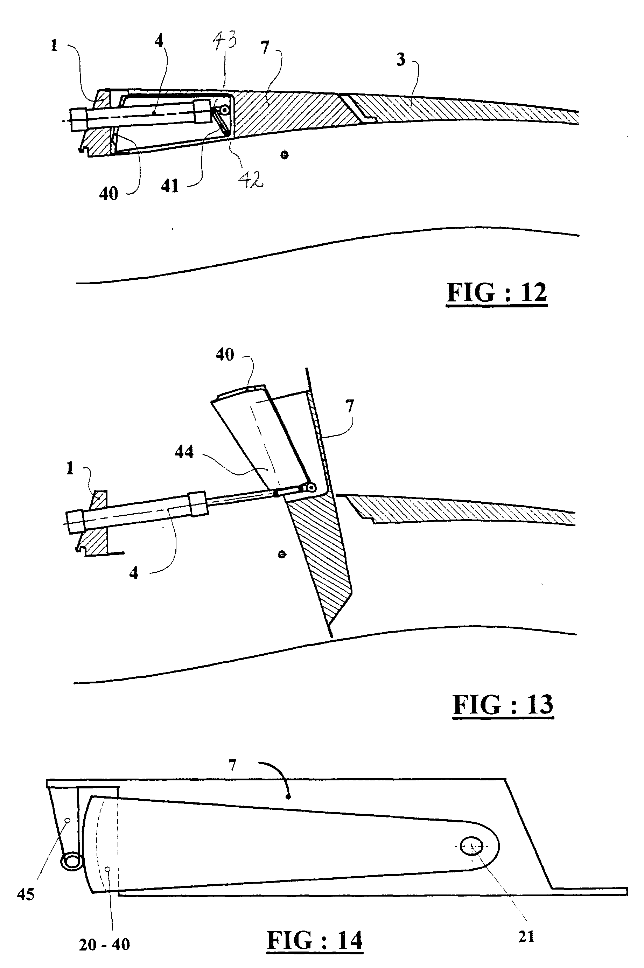

Les figures 12 et 13 montrent un principe basé sur l'entraînement du becquet 40 par le vérin 4 de la porte 7. Le becquet 40 comporte une structure 44 venant, en position de jet direct, recouvrir le vérin 4 et s'insérer dans le dégagement prévu dans le fond de la porte 7 pour permettre le logement du vérin. Cette structure 44 de becquet 40 peut être intégrée ou rapportée. Elle permet d'une part de rigidifier l'amont du becquet en phase d'inversion de jet et d'autre part de donner un point d'accrochage 42 pour l'entraînement dudit becquet par le vérin 4. Un pivot 43, en un point quelconque sur la structure mobile du vérin 4 de la porte 7 relie par une ou plusieurs bielles la structure 44 du becquet 40 en un ou plusieurs points positionnés de telle sorte que l'entraînement par la bielle 41 créé un différentiel angulaire entre la position du becquet 40 en jet direct et en jet inversé par rapport à la porte 7. Ce principe permet une position ressortie et conforme au besoin du becquet par rapport à la porte lorsque celle-ci est en position ouverte.

Il est bien entendu que tous ces principes peuvent être utilisés sur des portes comportant des cavités selon la nécessité.

Selon la figure 14, un ou des systèmes de guidage extérieurs 45, permettant de réduire voire d'annuler la déformée du becquet dans la phase d'inversion du jet, peuvent être associés à la porte 7, Ce peut être par frottement, par roulement ou tout autre, en position amont et/ou latéral du becquet 20 ou 40.

## Revendications

1. Inverseur de poussée de turboréacteur à double flux comportant des portes pivotantes (7) susceptibles en position fermée, lors d'un fonctionnement en jet direct, de s'intégrer dans la paroi extérieure du conduit de flux en arrière de la soufflante de turboréacteur, et susceptible en outre chacune de pivoter sous l'action d'un vérin(4) de manière à constituer des obstacles de déviation de flux lors d'un fonctionnement en inversion de poussée, les portes (7) étant séparées par des poutres longitudinales fixes (18), chaque porte (7) comportant à son bord amont un becquet (20 ; 40) mobile escamotable associé à des moyens de commande de déplacement tels que le becquet (20 ; 40) a une position escamotée lorsque la porte (7) est fermée, en jet direct et le becquet (20 ; 40) a une position de débordement par rapport au fond de porte lorsque la porte (7) est ouverte, en inversion de jet, **caractérisé en ce que** les moyens de commande de déplacement du becquet mobile (20 ; 40) par rapport à la porte (7) conservent une position inactive pendant une première phase d'ouverture de la porte (7), ledit becquet (20 ; 40) conservant une position escamotée tandis qu'en fin d'ouverture de la porte (7) seulement, lesdits moyens de commande assurent le déploiement du becquet (20 ; 40).

2. Inverseur de poussée selon la revendication 1 **caractérisé en ce que** le becquet mobile (20) comporte une partie frontale au bord amont de la porte et deux parties latérales articulées en aval autour d'un pivot (21), ledit becquet (20) est relié à la structure fixe d'inverseur par au moins un vérin (26) disposé entre une articulation fixe (29) et une liaison articulée (30) au becquet (20), une limitation de la course du piston du vérin (26) assure le déploiement du becquet (20) en fin d'ouverture de la porte (7) tandis qu'une liaison élastique à ressort entre la porte (7) et le becquet (20) assure la position escamotée du becquet (20) pendant la première phase de manoeuvre d'ouverture de la porte (7).

3. Inverseur de poussée selon la revendication 1 **caractérisé en ce que** le becquet mobile (20) comporte une partie frontale au bord amont de la porte et deux parties latérales articulées en aval autour d'un pivot, ledit becquet (20) est relié à la structure fixe d'inverseur par au moins une bielle (32) dont une extrémité coulisse dans une rainure (33) ménagée sur ladite structure fixe de manière que pendant la première phase de manoeuvre d'ouverture de la porte (7), le becquet (20) suit le déplacement de la porte grâce à une liaison élastique à ressort (31) en conservant sa position escamotée tandis qu'en fin d'ouverture de la porte (7), la bielle (32) en butée dans la rainure (33) assure le déploiement du becquet (20).

4. Inverseur de poussée selon la revendication 1 **caractérisé en ce que** le becquet mobile (40) comporte une structure (44), insérée, en position de jet direct, dans le logement ménagé dans le fond de la porte (7) où est disposé le vérin (4) de manoeuvre de la porte (7), ladite structure (44) de becquet recouvrant ledit vérin (4) et au moins une bielle (41) relie un point d'accrochage (42) situé sur ladite structure (44) de becquet (40) et un pivot (43) disposé sur la tige du vérin (4) de la porte (7) la longueur de bielle (41) et les positions respectives de ses extrémités (42, 43) étant déterminées en fonction des déplacement de la tige du vérin (4) de manoeuvre de la porte (7) de manière à assurer les positions choisies de déploiement du becquet (40) en fin d'ouverture de la porte (7).

5. Inverseur de poussée selon l'une quelconque des revendications 1 à 4 **caractérisé en ce qu'**un dispositif de guidage (45) solidarisé à la porte (7) assure un appui sur le becquet (20 ; 40) durant ses déplacements de manière à limiter les déformations du becquet (20 ; 40).

## Patentansprüche

1. Schubumkehrvorrichtung für Zweikreis-TL-Triebwerke, die Schwenkklappen (7) aufweist, die sich in Schließstellung im Direktstrahlbetrieb in die Außenwand der Strömungsleitung hinter dem Gebläse des Turbotriebwerks einfügen können und ferner jeweils geeignet sind, unter der Einwirkung eines Zylinders (4) dergestalt schwenken, dass sie im Umkehrschubbetrieb Strömungs-Umlenkhindernisse bilden, wobei die Klappen (7) durch feste Längsholme (18) getrennt sind, wobei jede Klappe (7) an ihrer Vorderkante einen bewegbaren, einklappbaren Spoiler (20; 40) enthält, der mit Bewegungssteuermitteln dergestalt verbunden ist, dass der Spoiler (20; 40) eine eingeklappte Stellung einnimmt, wenn die Klappe (7) im Direktstrahlbetrieb geschlossen ist, und dass der Spoiler (20; 40) eine vom Klappenboden hervorstehende Stellung einnimmt, wenn die Klappe (7) im Umkehrschubbetrieb geöffnet ist,
**dadurch gekennzeichnet,**
**dass** die Mittel zur Steuerung der Bewegung des bewegbaren Spoilers (20; 40) zur Klappe (7) in einer ersten Phase des Öffnens der Klappe (7) eine Ruhestellung einnehmen, wobei dieser Spoiler (20; 40) eine eingeklappte Stellung einnimmt, während diese Steuermittel erst am Ende des Öffnens der Klappe (7) das Ausklappen des Spoilers (20; 40) gewährleisten.

2. Schubumkehrvorrichtung nach Anspruch 1,
**dadurch gekennzeichnet,**
**dass** der bewegbare Spoiler (20) einen Frontteil an der Vorderkante der Klappe und zwei Seitenteile, die hinten um eine Drehachse (21) angelenkt sind, aufweist, dass dieser Spoiler (20) mit dem festen Aufbau der Schubumkehrvorrichtung durch mindestens einen Zylinder (26) verbunden ist, der zwischen einem festen Gelenk (29) und einem Gelenkverbindungselement (30) an dem Spoiler (20) angeordnet ist, dass eine Begrenzung des Hubs des Kolbens des Zylinders (26) das Ausklappen des Spoilers (20) bei Ende des Öffnens der Klappe (7) gewährleistet, während eine elastische Federverbindung zwischen der Klappe (7) und dem Spoiler (20) die eingezogene Stellung des Spoilers (20) während der ersten Steuerphase des Öffnens der Klappe (7) gewährleistet.

3. Schubumkehrvorrichtung nach Anspruch 1,
**dadurch gekennzeichnet,**
**dass** der bewegbare Spoiler (20) einen Frontteil an der Vorderkante der Klappe und zwei Seitenteile, die hinten um eine Drehachse angelenkt sind, aufweist, dass dieser Spoiler (20) mit dem festen Aufbau der Schubumkehrvorrichtung durch mindestens eine Stange (32) verbunden ist, deren eines Ende in einer Rille (33) gleitet, die an diesem festen Aufbau dergestalt ausgeführt ist, dass der Spoiler (20) während der ersten Steuerphase des Öffnens der Klappe (7) der Bewegung der Klappe dank einer elastischen Federverbindung (31) folgt, wobei er seine eingezogene Stellung beibehält, während bei Ende des Öffnens der Klappe (7) Stange (32), die sich in Anschlag in der Rille (33) befindet, das Ausklappen des Spoilers (20) gewährleistet.

4. Schubumkehrvorrichtung nach Anspruch 1,
**dadurch gekennzeichnet,**
**dass** der bewegbare Spoiler (40) einen Aufbau (44) aufweist, der im Direktstrahlbetrieb in der Aufnahme sitzt, die im Boden der Klappe (7) ausgeführt ist, wo der Steuerzylinder (4) der Klappe (7) angeordnet ist, wobei dieser Spoileraufbau (44) diesen Zylinder (4) überdeckt, und dass mindestens eine Stange (41) einen Befestigungspunkt (42), der sich an diesem Aufbau (44) des Spoilers (20) befindet, und eine Drehachse (43), die an der Stange des Zylinders (4) der Klappe (7) angeordnet ist, verbindet, wobei die Länge der Stange (41) und die jeweiligen Positionen ihrer Enden (42, 43) abhängig von den Bewegungen der Stange des Steuerzylinders (4) der Klappe (7) dergestalt bestimmt werden, dass die gewählten Ausklappstellungen des Spoilers (40) bei Ende des Öffnens der Klappe (7) gewährleistet sind.

5. Schubumkehrvorrichtung nach einem der Ansprüche 1 bis 4,
**dadurch gekennzeichnet,**
**dass** eine Führungseinrichtung (45), die fest mit der Klappe (7) verbunden ist, eine Anlage an dem Spoiler (20; 40) während seiner Bewegungen dergestalt gewährleistet, dass die Verformungen des Spoilers (20; 40) eingeschränkt werden.

## Claims

1. Bypass turbojet thrust reverser comprising pivoting doors (7) able, in a closed position, during operation in direct jet mode, to become incorporated into the outer wall of the flow duct behind the turbojet fan, and also each able to pivot under the action of a ram (4) in such a way as to form obstacles deflecting the flow during operation in reverse thrust mode, the doors (7) being separated by fixed longitudinal beams (18), each door (7) comprising, at its upstream edge, a retractable moving spoiler (20; 40) associated with motion-control means such that the spoiler (20; 40) has a retracted position when the door (7) is closed, in direct jet mode, and the spoiler (20; 40) has a position protruding from the end of the door when the door (7) is open, in reverse jet mode, **characterized in that** the means for controlling the movement of the moving spoiler (20; 40) with respect to the door (7) maintain an inactive position during a first phase of the opening of the door (7), the said spoiler (20; 40) maintaining a retracted position whereas, only at the end of the opening of the door (7) do the said control means deploy the spoiler (20; 40).

2. Thrust reverser according to Claim 1, **characterized in that** the moving spoiler (20) comprises a transverse part at the upstream edge of the door and two lateral parts articulated downstream about a pivot (21), the said spoiler (20) is connected to the reverser fixed structure by at least one ram (26) arranged between a fixed articulation (29) and an articulated connection (30) to the spoiler (20), the limiting of the travel of the piston of the ram (26) ensures deployment of the spoiler (20) at the end of the opening of the door (7), while a sprung elastic connection between the door (7) and the spoiler (20) ensures the retracted position of the spoiler (20) during the first phase in the manoeuvre of opening the door (7).

3. Thrust reverser according to Claim 1, **characterized in that** the moving spoiler (20) comprises a transverse part at the upstream edge of the door and two lateral parts articulated downstream about a pivot, the said spoiler (20) is connected to the reverser fixed structure by at least one link rod (32) one end of which slides in a slot (33) made on the said fixed structure in such a way that during the first phase of the manoeuvre of opening the door (7), the spoiler (20) follows the movement of the door by virtue of a sprung elastic connection (31), maintaining its retracted position, whereas at the end of the opening of the door (7), the link rod (32) in abutment against the end of the slot (33), causes the spoiler (20) to deploy.

4. Thrust reverser according to Claim 1, **characterized in that** the moving spoiler (40) comprises a structure (44) inserted, in the direct jet position, in the housing formed in the end of the door (7) where the ram (4) for operating the door (7) is arranged, the said spoiler structure (44) overlapping the said ram (4) and at least one link rod (41) connects a point of attachment (42) situated on the said structure (44) of the spoiler (40) and a pivot (43) arranged on the rod of the ram (4) of the door (7), the length of the link rod (41) and the respective positions of its ends (42, 43) being determined according to the movements of the rod of the ram (4) for operating the door (7) so as to ensure the chosen positions for deployment of the spoiler (40) at the end of the opening of the door (7).

5. Thrust reverser according to any one of Claims 1 to 4, **characterized in that** a guide device (45) secured to the door (7) presses on the spoiler (20; 40) during its movement so as to limit the deformation of the spoiler (20; 40).
